# EUROPÄISCHE PATENTSCHRIFT

(11) **EP 1 925 395 B1**
(45) Veröffentlichungstag und Bekanntmachung des Hinweises auf die Patenterteilung: **11.08.2010**
(21) Anmeldenummer: 07021679.1
(22) Anmeldetag: 08.11.2007
(51) Int. Cl.: B23Q 11/10

(54) **Verfahren zur Schmierung von gesteuert verfahrbaren Werkzeugen sowie Schmiermittelspender**
Method for lubricating remotely maneuverable tools and lubricant dispenser
Procédé de lubrification d'outils mobiles de façon commandée et distributeur de lubrifiant

(30) Priorität: 24.11.2006 DE 102006055460
(43) Veröffentlichungstag der Anmeldung: 28.05.2008
(73) Patentinhaber: Kuchel, Kai, 25746 Heide (DE)
(72) Erfinder: Kuchel, Robert, 25746 Heide (DE)
(74) Vertreter: Thomas, Götz

(56) Entgegenhaltungen:
- DE-U1- 20 213 799
- GB-A- 1 156 164
- US-A- 3 618 706
- US-A- 4 555 047
- US-A- 5 368 424
- US-A1- 2005 036 845

## Beschreibung

Die Erfindung betrifft ein Verfahren zur Schmierung eines gesteuert verfahrbaren Werkzeugs zur spanabhebenden oder formenden Bearbeitung von Werkstücken in einer Werkzeugmaschine, wie z.B. aus der DE-U-20213799 bekannt, sowie einen Schmiermittelspender und eine CNC-gesteuerte Werkzeugmaschine mit einem solchen Schmiermittelspender.

An die in Werkzeugmaschinen spanabhebend zu bearbeitenden Werkstücke werden immer höhere Anforderungen gestellt. Daher werden für die Werkstücke zunehmend Materialien verwendet, deren Zerspanungseigenschaften nur noch in CNC-gesteuerten Werkzeugmaschinen eine kostengünstige und rentable Herstellung zulassen, vor allem wenn eine Komplettbearbeitung der Werkstücke in mehrachsigen Bearbeitungszentren mit hohem Automatisierungsgrad vorgenommen wird.

In CNC-gesteuerten Werkzeugmaschinen erfolgt die Zerspanung der Werkstücke zum größten Teil unter Nassschmierung. Dabei werden in der Regel wässrige Kühl-Schmier-Emulsionen mit einem relativ geringen Ölgehalt verwendet, was zwar für eine Schmierung der meisten Zerspanungswerkzeuge ausreichend ist, nicht jedoch zum Beispiel für Gewindebohrer oder Gewindeformer, wenn mit diesen Gewinde in Werkstücken aus schwer zu bearbeitenden Werkstoffen hergestellt werden. In diesem Fall weisen die Werkzeuge häufig keine ausreichende Standzeit auf und verschleißen vorzeitig, was bei einer automatisierten Bearbeitung nachteilig ist.

Das Problem zu kurzer Werkzeugstandzeiten infolge einer unzureichenden Schmierung durch Kühl-Schmier-Emulsionen lässt sich allgemein dadurch vermeiden, dass zur Schmierung der Werkzeuge an Stelle der Kühl-Schmier-Emulsionen Schneidöle oder Schneidöle mit speziellen Schneidmittelzusätzen verwendet werden, mit denen sich insbesondere bei der Zerspanung von Werkstücken mit schlechten Zerspanungseigenschaften die Standzeiten der Werkzeuge beträchtlich erhöhen lassen.

Jedoch werden in normalen CNC-gesteuerten Werkzeugmaschinen üblicherweise keine Schneidöle eingesetzt.

Ausgehend hiervon liegt der Erfindung die Aufgabe zugrunde, ein Verfahren, einen Schmiermittelspender sowie eine CNC-gesteuerte Werkzeugmaschine der eingangs genannten Art dahingehend zu verbessern, dass sich die Standzeit von Werkzeugen durch eine bessere Schmierung verlängern lässt.

Diese Aufgabe wird erfindungsgemäß durch die Merkmale der Ansprüche 1, 9 bzw. 19 gelöst.

Der Erfindung liegt der Gedanke zugrunde, die hohen Bewegungsgeschwindigkeiten des Werkzeugs in modernen CNC-gesteuerten Werkzeugmaschinen auszunutzen, um das Werkzeug vor einem Bearbeitungsvorgang oder zwischen zwei Bearbeitungsvorgängen zum Schmiermittelspender zu verfahren und ein Betätigungsorgan des Schmiermittelspenders mit dem Werkzeug zu betätigen, um ein Schmiermittel auf das Werkzeug zuzuführen, dessen Schmiereigenschaften besser sind als die Schmiereigenschaften üblicher Kühl-Schmier-Emulsionen.

Um den Schmiermittelspender einfach und preiswert zu machen, ist er vorzugsweise als mechanischer Spender ausgebildet, der durch eine CNC-gesteuerte Relativbewegung zwischen dem Werkzeug und dem Betätigungsorgan betätigt wird, wobei das letztere vorzugsweise eine Druckkraft auf das Betätigungsorgan ausübt, um dieses entgegen der Kraft einer Feder in eine Spendestellung zu bewegen, in der Schmiermittel durch die Spendeöffnung auf das Werkzeug zugeführt wird.

In diesem Fall kann vorteilhaft die Länge des Bewegungswegs des Betätigungsorgans und/oder die Dauer der Bewegung des Betätigungsorgans so eingestellt werden, dass genau die richtige Menge Schmiermittel auf das Werkzeug zugeführt wird.

Vorzugsweise wird der Schmiermittelspender ortsfest an der Werkzeugmaschine befestigt, so dass seine Koordinaten nur einmal in das Maschinenprogramm der Werkzeugmaschine eingegeben werden müssen. Während in diesem Fall die Annäherung des Werkzeugs an den Schmiermittelspender ausschließlich durch die Eigenbewegung des Werkzeugs erfolgt, kann die Annäherung gemäß einer anderen Alternative auch teilweise durch eine Bewegung des Schmiermittelspenders erfolgen, zum Beispiel wenn dieser letztere an einem verfahrbaren Arbeitstisch der Werkzeugmaschine, oder einem auf dem Arbeitstisch aufgespannten Werkstück, befestigt wird.

In beiden Fällen werden die Bewegungen des Werkzeugs bzw. des Schmiermittelspenders durch ein Maschinenprogramm der Werkzeugmaschine gesteuert, das entsprechend programmiert wird, um das Werkzeug vor einem Bearbeitungsvorgang oder zwischen zwei Bearbeitungsvorgängen CNC-gesteuert an den Schmiermittelspender anzunähern und das Betätigungsorgan zu betätigen.

Vorzugsweise wird der Schmiermittelspender zur Schmierung von langgestreckten dünnen Werkzeugen eingesetzt, die innerhalb eines Bohrlochs oder eines anderen engen Kanals arbeiten, wie spanabhebende Bohrwerkzeuge, insbesondere Gewindebohrer, oder nicht spanabhebende Formwerkzeuge, insbesondere Gewindeformer für Innengewinde, die einerseits durch übliche Kühl-Schmier-Emulsionen häufig nicht ausreichend geschmiert werden und sich andererseits mit ihren freien Enden in die Spendeöffnung hinein bewegen lassen, um das Schmiermittel gezielt auf dem Arbeitsende des Werkzeug zu deponieren. Vorteilhaft ist zumindest in diesem Fall auch das Betätigungsorgan innerhalb der Spendeöffnung angeordnet und entlang derselben beweglich, wobei es zweckmäßig als Ventilkörper eines Dosierventils ausgebildet sein kann, der vom Werkzeug entgegen der Kraft einer Feder verlagert wird, um den Schmiermittelspeicher durch Öffnen des Dosierventils mit der Spendeöffnung zu verbinden und dadurch Schmiermittel in die Spendeöffnung zuzuführen. Die Menge des in die Spendeöffnung zugeführten und dort auf das Werkzeug abgegebenen Schmiermittels kann in diesem Fall auf einfache Weise durch die Länge des Bewegungswegs des Betätigungsorgans und/oder die Dauer seiner Betätigung eingestellt werden.

Zweckmäßig verschließt der als Betätigungsorgan ausgebildete Ventilkörper in unbetätigtem Zustand einen von einer Seite her in die Spendeöffnung mündenden, zum Schmiermittelspeicher führenden Schmiermittelkanal und weist an seinem dem Werkzeug zugewandten Stirnende einen abgestuften Querschnitt auf, um das Schmiermittel um den gesamten Umfang des Werkzeugs herum gleichmäßig in die Spendeöffnung zuzuführen. Die Spendeöffnung ist vorzugsweise zylindrisch ausgebildet, so dass sie zusammen mit dem in die Spendeöffnung eintauchenden Werkzeug einen Ringspalt begrenzt, der das in der Nähe einer Spitze des Werkzeugs durch das Dosierventil in die Spendeöffnung eintretende Schmiermittel gleichmäßig entlang des freien Endes des Werkzeugs verteilt, wobei die Wand der Spendöffnung eine Ausbreitung des Schmiermittels nach den Seiten zu verhindert.

Um ein Auswaschen von Schmiermittel aus der Spendeöffnung zu verhindern, ist diese zweckmäßig in der Nähe ihrer Mündung mindestens teilweise durch eine Membran verschlossen, die jedoch mit Schlitzen versehen ist, um einen Eintritt des Werkzeugs in die Spendeöffnung zu ermöglichen.

Bei dem Schmiermittel in dem erfindungsgemäßen Spender handelt es sich vorzugsweise um ein Schmiermittel mit einer pastösen oder cremigen Konsistenz, das besonders zum Gewindeschneiden und/oder zum Gewindeformen geeignet ist und dabei für gute Schmiereigenschaften und eine lange Standzeit des Werkzeugs sorgt. Wegen der pastösen oder cremigen Konsistenz wird das Schmiermittel zweckmäßig durch Beaufschlagung des Schmiermittelspeichers mit einem Druck in die Spendeöffnung zugeführt, sobald das Betätigungsorgan mit dem Werkzeug betätigt und dadurch eine Verbindung zwischen dem Schmiermittelspeichers und der Spendeöffnung hergestellt wird. Der Druck kann durch eine Feder oder durch ein Druckluftdepot im Schmiermittelspeicher oder über einen Druckluftanschluss des Schmiermittelspeichers aus einer externen Druckluftquelle aufgebracht werden.

Im folgenden wird die Erfindung anhand einiger in der Zeichnung dargestellter Ausführungsbeispiele näher erläutert. Es zeigen:
Fig. 1 eine perspektivische Ansicht eines beispielhaften Bearbeitungszentrums mit einem lösbar auf einem Werkstücktisch befestigten Schmiermittelspender;
Fig. 2: eine vergrößerte Seitenansicht eines Teils des Werkstücktischs und des Schmiermittelspenders;
Fig. 3: eine teilweise auseinandergezogene vergrößerte Querschnittsansicht des Schmiermittelspenders, jedoch mit einer anderen Befestigungseinrichtung;
Fig. 4: eine Ansicht entsprechend Fig. 3, jedoch ohne Schmiermittelspeicher und während einer Abgabe von Schmiermittel auf einen Gewindebohrer oder Gewindeformer;
Fig. 5: eine Ansicht entsprechend Fig. 3, jedoch nach dem Entfernen des Gewindebohrers oder Gewindeformer und mit einer noch anderen Befestigungseinrichtung;
Fig. 6: eine Stirnseitenansicht des Schmiermittelspenders aus Fig. 5.

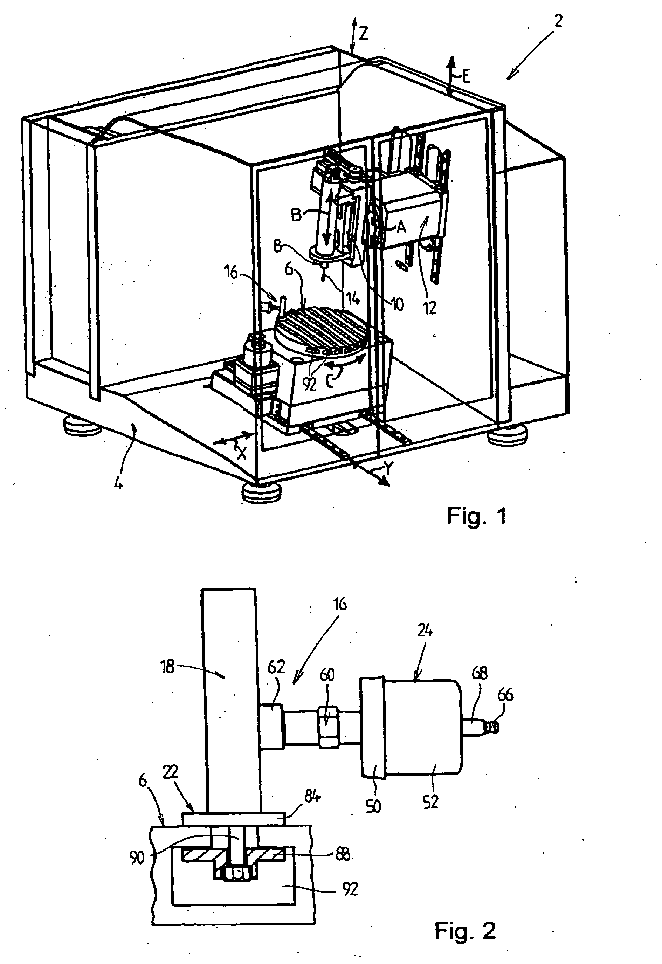

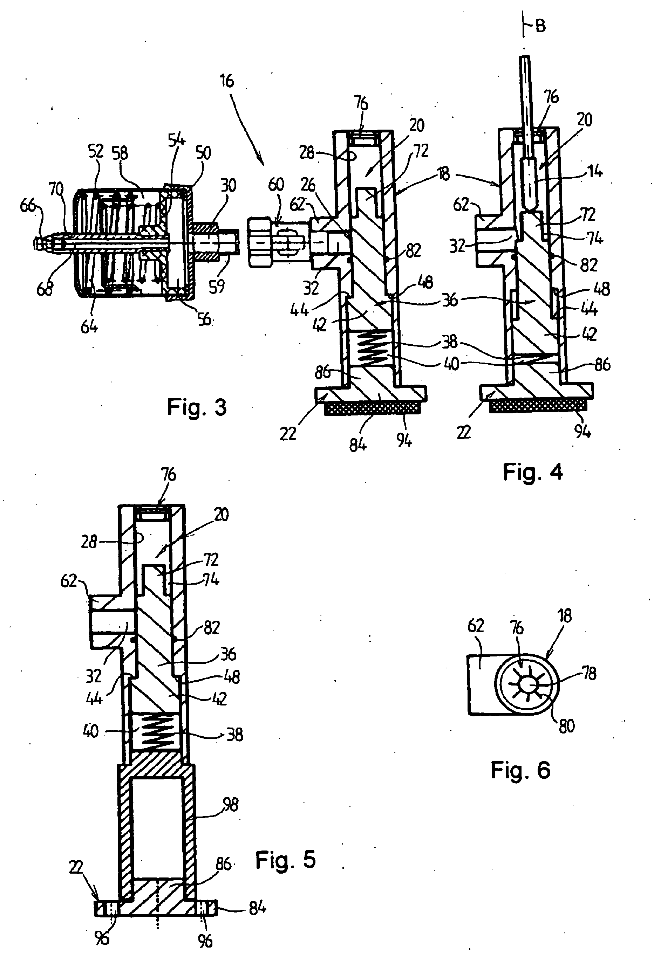

Das in Fig. 1 dargestellte Bearbeitungszentrum 2 dient überwiegend zur spanabhebenden Bearbeitung von Werkstücken und umfasst dazu ein Maschinengehäuse 4, einen als Arbeitstisch dienenden Werkstückspanntisch 6, auf dessen Oberseite sich die zu bearbeitenden Werkstücke aufspannen lassen, sowie einen Bohr- oder Fräskopf 8, der sich mit insgesamt sechs Freiheitsgraden der Bewegung in Bezug zu einem auf dem Arbeitstisch 6 aufgespannten Werkstück (nicht dargestellt) bewegen lässt, um das Werkstück zu bearbeiten. Um die sechs Freiheitsgrade der Bewegung zu erreichen, ist zum einen der Arbeitstisch 6 mit Hilfe von drei unter dem Arbeitstisch 6 angeordneten Verstelleinrichtungen mit elektromotorischem Antrieb programmgesteuert in Richtung der zwei zueinander senkrechten Achsen X und Y linear verfahrbar, wie durch entsprechende Doppelpfeile angezeigt, sowie um eine zu diesen Achsen X und Y senkrechte Achse Z drehbar, wie durch den Doppelpfeil C angezeigt. Zum anderen ist der Bohr- oder Fräskopf 8 in Bezug zu einem Bohr- oder Fräskopfhalter 10 in Richtung einer Achse B linear verfahrbar, der Bohr- oder Fräskopfhalter 10 ist in Bezug zu einem Träger 12 um eine zur Achse B senkrechte Achse A drehbar, und zuletzt ist der Träger 12 parallel zur Achse Z in Bezug zum Maschinengehäuse 4 linear verfahrbar, wie durch den Doppelpfeil E angezeigt. Die Bewegungen des Bohr- oder Fräskopfs 8, des Bohr- oder Fräskopfhalters 10 und des Trägers 12 werden CNC-gesteuert mit Hilfe von weiteren Verstelleinrichtungen vorgenommen, die ebenfalls mit einem elektromotorischen Antrieb ausgestattet sind und durch ein Maschinenprogramm des Bearbeitungszentrums für das jeweilige Werkstück gesteuert werden. Der Bohr- oder Fräskopfhalter 10 ist zudem mit einem Drehantrieb ausgestattet, mit dem ein im Bohr- oder Fräskopf 8 eingespanntes Werkzeug, wie der in Fig. 1 und 4 dargestellte Gewindebohrer 14 oder Gewindeformer, um die Achse B drehend angetrieben werden kann.

Das Bearbeitungszentrum 2 umfasst weiter eine an sich bekannte Schmiereinrichtung zur Nassschmierung und Kühlung des Werkzeugs bei der spanabhebenden Bearbeitung des Werkstücks, die in Fig. 1 zur Vereinfachung nicht dargestellt ist. Mit dieser bekannten Schmiereinrichtung kann im Betrieb des Bearbeitungszentrums 2 eine wässrige Kühl-Schmier-Emulsion mit einem Ölanteil von etwa 5 bis 10 % auf das rotierende Werkzeug bzw. auf das Werkstück gesprüht werden.

Eine solche Schmierung eignet sich zwar gut, um Fräswerkzeuge bei der Bearbeitung eines Werkstücks zu kühlen, reicht jedoch bei einer spanabhebenden Bearbeitung des Werkstücks durch Bohren nicht immer aus und kann besonders beim spanabhebenden Einschneiden eines Gewindes oder beim nicht spanabhebenden Einformen eines Gewindes in eine Kernbohrung des Werkstücks mittels eines im Bohr- oder Fräskopf 8 eingespannten Gewindebohrers 14 bzw. Gewindeformers unzureichend sein, um genügend Schmiermittel ins Innere der Kernbohrung zuzuführen.

Dadurch kommt es besonders bei schwer zerspanbaren Materialien zu einem vorzeitigen Verschleiß des Gewindebohrers 14 oder Gewindeformers, so dass dieser häufig ersetzt werden muss. Dies wiederum hat zum einen relativ hohe Werkzeugkosten und zum anderen unerwünschte Unterbrechungen des Betriebsablaufs der Bearbeitung zur Folge.

Aus diesem Grund ist das Bearbeitungszentrum 2 mit einem erfindungsgemäßen Schmiermittelspender 16 ausgestattet, der bei Bedarf lösbar am Arbeitstisch 4, wie in Fig. 1 dargestellt, am Werkstück oder an einer anderen Stelle im Bewegungsbereich des Gewindebohrers 14 oder Gewindeformers bzw. eines anderen, im Bohr- oder Fräskopf 8 eingespannten Werkzeugs, wie ein Bohrwerkzeug, befestigt werden kann.

Wie am besten in Fig. 2 und 3 dargestellt, umfasst der Schmiermittelspender 16 einen hohlen zylindrischen Spenderteil 18, dessen eines Stirnende offen ist und eine Spendeöffnung 20 zur Abgabe von Schmiermittel auf den Gewindebohrer 14 oder Gewindeformer umgibt, ein am entgegengesetzten Stirnende des Spenderteils 18 angebrachtes Befestigungselement 22 zur abnehmbaren Befestigung des Schmiermittelspenders 16, einen seitlich über den Spenderteil 18 überstehenden Schmiermittelspeicher 24, der ein unter Druck stehendes Schmiermittel enthält, sowie ein zwischen dem Schmiermittelspeicher 24 und der Spendeöffnung 20 angeordnetes Dosierventil 26, das durch eine Bewegung des freien Endes des Gewindebohrers 14 oder Gewindeformers in die Spendeöffnung 20 betätigt wird, um Schmiermittel in die Spendeöffnung 20 zuzudosieren.

Der Spenderteil 18 umschließt eine zum Befestigungselement 22 hin erweiterte Stufenbohrung 28, in die von der Seite her ein radialer, mit einem Auslass 30 des Schmiermittelspeichers 24 kommunizierender Schmiermittelkanal 32 mündet, der durch Betätigung des Dosierventils 26 mit der Spendeöffnung 20 in Verbindung gebracht wird, um dadurch Schmiermittel aus dem Schmiermittelspeicher 24 in die Spendeöffnung 20 austreten zu lassen. Die Stufenbohrung 28 beherbergt ein zur Längsachse 34 des Spenderteils 18 und der Stufenbohrung 28 koaxiales Ventilglied 36 des Dosierventils 26, das zur Betätigung des Dosierventils 26 vom freien Ende des Gewindebohrers 14 oder Gewindeformers entgegen der Kraft einer Schraubendruckfeder 38 verschiebbar ist. Die in einer Kammer 40 zwischen dem Befestigungselement 22 und dem Ventilglied 36 angeordnete, gegen das Befestigungselement 22 abgestützte vorgespannte Feder 38 übt eine Druckkraft auf ein erweitertes hinteres Stirnende 42 des Ventilglieds 36 aus, so dass dieses letztere bei unbetätigtem Dosierventil 26 in der Stufenbohrung 28 in Richtung Spendeöffnung 20 verschoben wird, wobei es die Mündung des Schmiermittelkanals 32 verschließt, wie in Fig. 3 und 5 dargestellt. Die Vorwärtsbewegung des Ventilglieds 36 wird dadurch begrenzt, dass eine Ringschulter 44 zwischen dem hinteren Stirnende 42 und einem zylindrischen Mittelteil 46 des Ventilglieds 36 gegen eine komplementäre Ringschulter 48 der Stufenbohrung 28 anschlägt.

Der Schmiermittelspeicher 24 besteht im Wesentlichen aus einem zylindrischen Behälter mit einem flachen tellerförmigen Boden 50 und einem becherförmigen Deckel 52, sowie einem im Innerem des Behälters 50, 52 beweglichen zylindrischen Kolben 54, der zusammen mit dem Boden 50 des Behälters 50, 52 eine Kammer 56 für Schmiermittel und zusammen mit dem Deckel 52 des Behälters 50, 52 eine Federkammer 58 begrenzt. Die Schmiermittelkammer 56 kommuniziert durch den mittigen Auslass 30 im Boden 50 des Behälters 50, 52 mit einem über den Boden 50 überstehenden Schraubstutzen 59, mit dem der Schmiermittelspeicher 24 in eine Absperrarmatur 60 eingeschraubt ist, die selbst wiederum in einen den Schmiermittelkanal 32 umgebenden radial über den Spenderteil 18 überstehenden Anschlussstutzen 62 eingeschraubt ist. In die Federkammer 58 ist eine unter Vorspannung stehende Schraubendruckfeder 64 eingesetzt, die den Kolben 54 in Richtung des Bodens 50 drückt. In eine mittige Gewindebohrung des Kolbens 54 ist ein über dessen Oberseite überstehendes, an seinem oberen Ende mit einem Schmiernippel 66 verschlossenes Schmiermitteleinfüllrohr 68 eingesetzt, durch das die Schmiermittelkammer 56 mit Hilfe einer an den Schmiernippel 66 angeschlossenen Fettpresse unter Druck mit dem Schmiermittel befüllt werden kann. Bei Zufuhr von Schmiermittel in die Schmiermittelkammer 56 wird die Feder 64 infolge der vom Boden 50 weg gerichteten Aufwärtsbewegung des Kolbens 54 zusammen gedrückt, während sich das Schmiermitteleinfüllrohr 68 durch eine mittige Öffnung 70 im Deckel 52 mehr und mehr nach außen bewegt, so dass es als Anzeige für den Füllstand des Schmiermittels im Speicher 24 dienen kann.

Bei dem Schmiermittel in der Schmiermittelkammer 56 handelt es sich um ein speziell zum Gewindeschneiden und/oder zum Gewindeformen geeignetes oder bestimmtes Schmiermittel mit einer pastösen oder cremigen Konsistenz, so dass das im Inneren der Spendeöffnung 20 auf den Gewindebohrer 14 oder Gewindeformer zugeführte Schmiermittel beim Verfahren dieses Werkzeugs 14 bis zu dem zu bearbeitenden Kernloch des Werkstücks trotz der hohen Bewegungsgeschwindigkeiten am Werkzeug 14 haften bleibt. Das Schmiermittel wird immer dann durch die Kraft der Schraubendruckfeder 64 aus der Schmiermittelkammer 56, durch den Auslass 30, die geöffnete Absperrarmatur 60 und den Schmiermittelkanal 32 gepresst, wenn dessen Mündung durch eine Betätigung des Dosierventils 26 vom Ventilglied 36 freigegeben wird, wie in Fig. 4 dargestellt.

Die Dosiermenge des bei der Betätigung des Dosierventils 26 in die Spendeöffnung 20 zuzuführenden Schmiermittels wird über den Bewegungsweg des Gewindebohrers 14 oder Gewindeformers und damit des Ventilglieds 36 in der Stufenbohrung 28 gesteuert, indem dieser Bewegungsweg unter Berücksichtigung der Öffnungsquerschnitte des Schmiermittelkanals 32 und von dessen Mündung in die Spendeöffnung 20, der Viskosität des Schmiermittels und der Verweilzeit des Gewindebohrers 14 oder Gewindeformers in der Spendeöffnung 20 im Maschinenprogramm des Bearbeitungszentrums 2 auf einen Wert eingestellt wird, welcher der gewünschten Schmiermittelmenge auf dem freien Ende des Gewindebohrers 14 oder Gewindeformers entspricht.

Um die Dosiergenauigkeit zu verbessern und um den gesamten Umfang des Gewindebohrers 14 oder Gewindeformers herum eine gleichmäßige Zufuhr des Schmiermittels in die Spendeöffnung 20 zu gewährleisten, weist der Ventilkörper 36 auf seiner der Spendeöffnung 20 zugewandten Seite ein abgestuftes Stirnende 72 auf. Zwischen dem Stirnende 72 und der Innenwand der Stufenbohrung 28 wird ein Ringspalt 74 begrenzt, durch den das seitlich aus dem Schmiermittelkanal 32 einströmende Schmiermittel um den Gewindebohrer 14 oder Gewindeformer herum verteilt wird.

Am vorderen Ende des Spenderteils 18 ist eine Membran 76 in die Stufenbohrung 28 eingesetzt, die zum einen ein Auswaschen des in der Spendeöffnung 20 befindlichen Schmiermittels durch die im Bearbeitungszentrum 2 versprühte wässrige Kühl-Schmier-Emulsion verhindert und zum anderen als Abstreifer dient, um das bei der Betätigung des Ventils 26 in die Spendeöffnung 20 zugeführte und am freien Ende des Gewindebohrers 14 oder Gewindeformers haftende Schmiermittel beim Herausziehen desselben aus der Spendeöffnung 20 in die Zwischenräume zwischen benachbarten Gewindeschneiden des Gewindebohrers 14 oder Gewindeformers zu streifen. Wie am besten in Fig. 6 dargestellt, weist die Membran 76 eine kreisförmige mittige Durchtrittsöffnung 78 auf, von der mehrere radiale Schlitze 80 ausstrahlen, welche die Membran 76 in einzelne Segmente unterteilen.

Die Absperrarmatur 60 kann geschlossen werden, um einen Austritt von Schmiermittel aus dem Schmiermittelspeicher 24 zu verhindern, wenn dieser zum Beispiel zu Wartungszwecken zusammen mit der Absperrarmatur 60 vom Spenderteil 18 abgeschraubt werden soll.

Um zu verhindern, dass bei der Bewegung des Ventilglieds 36 des Dosierventils 26 Schmiermittel aus der Spendeöffnung 20 oder dem Schmiermittelkanal 32 nach hinten in die Kammer 40 mitgeführt wird, ist hinter der Mündung des Schmiermittelkanals 32 eine Ringnut in der Innenwand der Stufenbohrung 28 ausgespart, in die ein O-Ring 82 eingesetzt ist.

Das Befestigungselement 22 zur lösbaren Befestigung des Schmiermittelspenders 16 umfasst bei sämtlichen dargestellten Ausführungsbeispielen eine als Standfuß dienende flache zylindrische Scheibe 84 mit einem überstehenden Zapfen 86, der in den erweiterten Teil der Stufenbohrung 28 eingepresst oder eingeschraubt werden kann.

Bei dem in Fig. 1 und 2 dargestellten Ausführungsbeispiel wird der Standfuß 84 mit Hilfe eines quadratischen Klemmkörpers 88 auf dem Arbeitstisch 6 festgeklemmt. Durch den Klemmkörper 88 wird von unten her eine Sechskantschraube 90 eingeführt, so dass ihr Kopf in ein komplementäres Sackloch des Klemmkörpers 88 ragt. Nach dem Einführen des Klemmkörpers 88 in eine von mehreren nach oben offenen hinterschnittenen Nuten 92 des Arbeitstischs 6 kann der Schmiermittelspender 16 auf dem nach oben über die Oberseite des Arbeitstischs 6 überstehenden Schaft der Schraube 90 befestigt werden, indem dieser letztere in eine Gewindebohrung der Scheibe 84 eingeschraubt und dann der Schmiermittelspender 16 unter Annäherung der Scheibe 84 und des Klemmköpers 88 festgezogen wird.

Bei dem in Fig. 3 und 4 dargestellten Ausführungsbeispiel ist die Scheibe 84 des Standfußes auf ihrer Unterseite mit einem scheibenförmigen Permanentmagneten 94 versehen, mit dem der Schmiermittelspender 16 auf einer beliebigen Oberfläche eines ferromagnetischen Teils des Bearbeitungszentrums 2 befestigt werden kann.

Bei dem Ausführungsbeispiel in Fig. 6 weist die Scheibe 84 des Standfußes zur Längsachse des Spendeteils 18 parallele Schraubenbohrungen 96 auf, so dass der Schmiermittelspender 16 an einem mit entsprechenden Gewindebohrungen versehenen Teil des Bearbeitungszentrums 2 festgeschraubt werden kann. Zur Verlängerung des Spenderteils 18 ist hier zwischen diesen und den Standfuß noch ein röhrenförmiges Verlängerungsstück 98 eingesetzt.

Nach der Befestigung des Schmiermittelspenders 16 wird dieser vermessen und die Koordinaten der Spendeöffnung 20 in einem Bezugssystem des Arbeitstischs 6 in das Maschinenprogramm des Bearbeitungszentrums 2 eingegeben, so dass die Spendeöffnung 20 mit dem Gewindebohrer 14 oder Gewindeformer angefahren werden kann. Entsprechendes gilt, wenn der Schmiermittelspender 16 an einem ortsfesten Teil des Bearbeitungszentrums 2 oder am Werkstück befestigt wird, wobei dann jedoch die Koordinaten der Spendeöffnung 20 in einem Bezugssystem des Maschinengehäuses 4 bzw. des Werkstücks eingegeben werden.

Die Ausrichtung des Schmiermittelspenders 16 bei seiner Befestigung kann grundsätzlich beliebig sein, vorausgesetzt dass sich die Bewegungsachse B des Bohr- oder Fräskopfs 8 durch eine gesteuerte Bewegung des Arbeitstischs 6, des Bohr- oder Fräskopfs 8, der Bohr- oder Fräskopfhalterung 10 und/oder des Trägers 12 mit der Längsachse des Spenderteils 18 zur Fluchtung bringen lässt, wenn vor einem Bearbeitungsvorgang oder zwischen zwei Bearbeitungsvorgängen Schmiermittel auf den Gewindebohrer 14 oder Gewindeformer zugeführt werden soll.

Die Steuerung der Bewegung des Arbeitstischs 6, des Bohr- oder Fräskopfs 8, der Bohr- oder Fräskopfhalterung 10 und/oder des Trägers 12 zur Ausrichtung der Bewegungsachse B des Bohr- oder Fräskopfs 8 mit der Längsachse des Spenderteils 18 erfolgt durch eine entsprechende Programmierung im Maschinenprogramm des Bearbeitungszentrums 2, wie oben angegeben. Aufgrund der hohen Geschwindigkeit der Bewegungen des Arbeitstischs 6, des Bohr- oder Fräskopfs 8, der Bohr- oder Fräskopfhalterung 10 und/oder des Trägers 12 in modernen Bearbeitungszentren ist es möglich, den Gewindebohrer 14 oder Gewindeformer durch eine Relativbewegung sehr schnell an den Schmiermittelspender 16 anzunähren. Wenn die Bewegungsachse B des Bohr- oder Fräskopfs 8 mit der Längsachse des Spenderteils 18 fluchtet, wird der Bohr- oder Fräskopf 8 mit dem Gewindebohrer 14 oder Gewindeformer so weit in Richtung der Achse B verfahren, dass das freie Ende des Gewindebohrers 14 oder Gewindeformers bis zum Kontakt mit dem Ventilkörper 36 in die Spendeöffnung 20 eintaucht und den letzteren dann entgegen der Kraft der Feder 38 um ein im Maschinenprogramm eingestelltes Maß verschiebt. Dies bewirkt, dass der Ventilkörper 36 die Mündung des Schmiermittelkanals 32 ganz oder teilweise freigibt, wie in Fig. 4 dargestellt, und die gewünschte Menge an Schmiermittel aus dem Schmiermittelspeicher 24 durch den Schmiermittelkanal 32 in die Spendeöffnung 20 zugeführt wird.

## Patentansprüche

1. Verfahren zur Schmierung eines gesteuert verfahrbaren Werkzeugs zur spanabhebenden oder formenden Bearbeitung von Werkstücken in einer Werkzeugmaschine, **dadurch gekennzeichnet, dass** das Werkzeug (14) vor einem Bearbeitungsvorgang oder zwischen zwei Bearbeitungsvorgängen durch eine Eigenbewegung des Werkzeugs (14) an einen Schmiermittelspender (16) angenähert wird, und dass dann durch Kontakt des Werkzeugs (14) mit einem Betätigungsorgan (36) des Schmiermittelspenders (16) das Betätigungsorgan (36) mechanisch betätigt wird, um aus einem Schmiermittelspeicher (24) des Schmiermittelspenders (16) Schmiermittel zur Abgabe auf das Werkzeug (14) in eine Spendeöffnung (20) des Schmiermittelspenders (16) zuzuführen.

2. Verfahren nach Anspruch 1, **dadurch gekennzeichnet, dass** das Betätigungsorgan (36) durch das Werkzeug (14) bewegt wird.

3. Verfahren nach Anspruch 2 oder 3, **dadurch gekennzeichnet, dass** die Menge des auf das Werkzeug (14) abgegebenen Schmiermittels durch die Länge des Bewegungswegs des Betätigungsorgans (36) bzw. des Werkzeugs (14) und/oder durch die Dauer der Bewegung des Betätigungsorgans (36) bzw. des Werkzeugs (14) gesteuert wird.

4. Verfahren nach einem der vorangehenden Ansprüche, **dadurch gekennzeichnet, dass** die Annäherung des Werkzeugs (14) an den Schmiermittelspender (16) teilweise durch eine Bewegung des Schmiermittelspenders (16) erfolgt.

5. Verfahren nach einem der vorangehenden Ansprüche, **dadurch gekennzeichnet, dass** der Schmiermittelspeicher (24) mit Druck beaufschlagt wird, um das Schmiermittel in die Spendeöffnung (20) zuzuführen.

6. Verfahren nach einem der vorangehenden Ansprüche, **dadurch gekennzeichnet, dass** der Schmiermittelspender (16) lösbar an einem ortsfesten oder beweglichen Teil (6) der Werkzeugmaschine (2) oder an dem zu bearbeitenden Werkstück befestigt wird.

7. Verfahren nach einem der vorangehenden Ansprüche, **dadurch gekennzeichnet, dass** die Bewegungen des Werkzeugs (14) und/oder des Schmiermittelspenders (16) durch ein Maschinenprogramm der Werkzeugmaschine (2) gesteuert werden, und dass die Position des lösbar befestigten Schmiermittelspenders (16) in das Maschinenprogramm eingegeben wird, um das Werkzeug (14) vor einem Bearbeitungsvorgang oder zwischen zwei Bearbeitungsvorgängen an den Schmiermittelspender (16) anzunähern und das Betätigungsorgan (36) zu betätigen.

8. Verfahren nach Anspruch 7, **dadurch gekennzeichnet, dass** ein Bewegungsweg des Werkzeugs (14) nach seinem Kontakt mit dem Betätigungsorgan (36) in das Maschinenprogramm eingegeben wird, um die Menge des in die Spendeöffnung (20) zugeführten Schmiermittels zu steuern.

9. Schmiermittelspender zur Schmierung eines spanabhebenden oder formenden Werkzeugs in einer Werkzeugmaschine, mit einem Schmiermittel enthaltenden Schmiermittelspeicher (24) und einem Betätigungsorgan (36) zum Verbinden des Schmiermittelspeichers (24) mit einer Spendeöffnung (20), **dadurch gekennzeichnet, dass** das Betätigungsorgan (36) in der Spendeöffnung (20) durch Kontakt mit dem Werkzeug (14) mechanisch betätigbar ist.

10. Schmiermittelspender nach Anspruch 9, **dadurch gekennzeichnet, dass** das Betätigungsorgan (36) beweglich ist und durch das Werkzeug (14) bewegt wird, um Schmiermittel zur Abgabe auf das Werkzeug (14) in die Spendeöffnung (20) zuzuführen.

11. Schmiermittelspender nach Anspruch 10, **dadurch gekennzeichnet, dass** das Betätigungsorgan (36) entgegen der Kraft einer Feder (38) bewegbar ist.

12. Schmiermittelspender nach Anspruch 10 oder 11, **dadurch gekennzeichnet, dass** die Länge des Bewegungswegs des Betätigungsorgans (36) und/oder die Dauer der Bewegung des Betätigungsorgans (36) die Menge des auf das Werkzeug (14) abgegebenen Schmiermittels bestimmt.

13. Schmiermittelspender nach einem der Ansprüche 9 bis 12, **gekennzeichnet durch** eine Befestigungseinrichtung (22, 88, 90, 94, 96) zur lösbaren Befestigung des Schmiermittelspenders (16) an einem ortsfesten oder beweglichen Teil der Werkzeugmaschine (2) oder an dem zu bearbeitenden Werkstück.

14. Schmiermittelspender nach Anspruch 13, **dadurch gekennzeichnet, dass** die Befestigungseinrichtung (22, 94) mindestens einen Magneten (94) umfasst.

15. Schmiermittelspender nach Anspruch 13, **dadurch gekennzeichnet, dass** die Befestigungseinrichtung (22, 88) mindestens einen Klemmkörper (88) umfasst.

16. Schmiermittelspender nach einem der Ansprüche 9 bis 15, **dadurch gekennzeichnet, dass** das Schmiermittel eine pastöse oder cremige Konsistenz besitzt.

17. Schmiermittelspender nach einem der Ansprüche 9 bis 16, **dadurch gekennzeichnet, dass** das Schmiermittel im Schmiermittelspeicher (24) unter Druck steht.

18. Schmiermittelspender nach einem der Ansprüche 9 bis 17, **dadurch gekennzeichnet, dass** das Werkzeug ein langgestrecktes Werkzeug und insbesondere ein Gewindebohrer (14), Gewindeformer oder Bohrer ist, der sich mit seinem freien Ende in die Spendeöffnung (20) einführen lässt.

19. CNC-gesteuerte Werkzeugmaschine, **gekennzeichnet durch** einen Schmiermittelspender nach einem der vorangehenden Ansprüche.

## Claims

1. Method of lubricating a tool, movable in a controlled manner, for cutting or shaping workpieces in a machine tool, **characterized in that** the tool (14) is brought closer to a lubricant dispenser (16) by an independent movement of the tool (14) before a machining operation or between two machining operations, and **in that** then, by contact between the tool (14) and an actuating member (36) of the lubricant dispenser (16), the actuating member (36) is mechanically actuated in order to feed lubricant for delivery to the tool (14) from a lubricant reservoir (24) of the lubricant dispenser (16) into a dispensing opening (20) of the lubricant dispenser (16).

2. Method according to Claim 1, **characterized in that** the actuating member (36) is moved by the tool (14).

3. Method according to Claim 2 or 3, **characterized in that** the quantity of the lubricant delivered to the tool (14) is controlled by the length of the path of movement of the actuating member (36) or of the tool (14) and/or by the duration of the movement of the actuating member (36) or of the tool (14).

4. Method according to one of the preceding claims, **characterized in that** the tool (14) is brought closer to the lubricant dispenser (16) partly by a movement of the lubricant dispenser (16).

5. Method according to one of the preceding claims, **characterized in that** pressure is applied to the lubricant dispenser (24) in order to feed the lubricant into the dispensing opening (20).

6. Method according to one of the preceding claims, **characterized in that** the lubricant dispenser (16) is detachably fastened to a fixed or movable part (6) of the machine tool (2) or to the workpiece to be machined.

7. Method according to one of the preceding claims, **characterized in that** the movements of the tool (14) and/or of the lubricant dispenser (16) are controlled by a machine program of the machine tool (2), and **in that** the position of the detachably fastened lubricant dispenser (16) is entered into the machine program in order to bring the tool (14) closer to the lubricant dispenser (16) and actuate the actuating member (36) before a machining operation or between two machining operations.

8. Method according to Claim 7, **characterized in that** a path of movement of the tool (14) is entered into the machine program after contact of said tool (14) with the actuating member (36) in order to control the quantity of the lubricant fed into the dispensing opening (20).

9. Lubricant dispenser for lubricating a cutting or shaping tool in a machine tool, having a lubricant reservoir (24) containing lubricant and an actuating member (36) for connecting the lubricant reservoir (24) to a dispensing opening (20), **characterized in that** the actuating member (36) can be mechanically actuated in the dispensing opening (20) by contact with the tool (14).

10. Lubricant dispenser according to Claim 9, **characterized in that** the actuating member (36) is movable and is moved by the tool (14) in order to feed lubricant for delivery to the tool (14) into the dispensing opening (20).

11. Lubricant dispenser according to Claim 10, **characterized in that** the actuating member (36) can be moved against the force of a spring (38).

12. Lubricant dispenser according to Claim 10 or 11, **characterized in that** the length of the path of movement of the actuating member (36) and/or the duration of the movement of the actuating member (36) determines the quantity of the lubricant delivered to the tool (14).

13. Lubricant dispenser according to one of Claims 9 to 12, **characterized by** a fastening device (22, 88, 90, 94, 96) for detachably fastening the lubricant dispenser (16) to a fixed or movable part of the machine tool (2) or to the workpiece to be machined.

14. Lubricant dispenser according to Claim 13, **characterized in that** the fastening device (22, 94) comprises at least one magnet (94).

15. Lubricant dispenser according to Claim 13, **characterized in that** the fastening device (22, 88) comprises at least one clamping body (88).

16. Lubricant dispenser according to one of Claims 9 to 15, **characterized in that** the lubricant has a pasty or creamy consistency.

17. Lubricant dispenser according to one of Claims 9 to 16, **characterized in that** the lubricant is under pressure in the lubricant dispenser (24).

18. Lubricant dispenser according to one of Claims 9 to 17, **characterized in that** the tool is an elongated tool and is in particular a tap (14), thread former or drill which can be inserted with its free end into the dispensing opening (20).

19. CNC machine tool, **characterized by** a lubricant dispenser (16) according to one of the preceding claims.

## Revendications

1. Procédé de lubrification d'un outil déplaçable de manière commandée pour l'usinage par enlèvement de copeaux ou par façonnage de pièces dans une machine-outil, **caractérisé en ce que** l'outil (14), avant une opération d'usinage ou entre deux opérations d'usinage, est rapproché d'un dispositif de lubrifiant (16) par un mouvement propre de l'outil (14), et **en ce qu'**ensuite, par contact de l'outil (14) avec un organe d'actionnement (36) du distributeur de lubrifiant (16), l'organe d'actionnement (36) est actionné mécaniquement, afin d'acheminer du lubrifiant à partir d'un accumulateur de lubrifiant (24) du dispositif de lubrifiant (16) dans une ouverture de délivrance (20) du distributeur de lubrifiant (16) pour le délivrer à l'outil (14).

2. Procédé selon la revendication 1, **caractérisé en ce que** l'organe d'actionnement (36) est déplacé par l'outil (14).

3. Procédé selon la revendication 2 ou 3, **caractérisé en ce que** la quantité de lubrifiant délivrée à l'outil (14) est commandée par la longueur de la course de déplacement de l'organe d'actionnement (36) ou de l'outil (14) et/ou par la durée du mouvement de l'organe d'actionnement (36) ou de l'outil (14).

4. Procédé selon l'une quelconque des revendications précédentes, **caractérisé en ce que** le rapprochement de l'outil (14) du distributeur de lubrifiant (16) s'effectue en partie par un déplacement du distributeur de lubrifiant (16).

5. Procédé selon l'une quelconque des revendications précédentes, **caractérisé en ce que** l'accumulateur de lubrifiant (24) est sollicité en pression, afin d'acheminer le lubrifiant dans l'ouverture de délivrance (20).

6. Procédé selon l'une quelconque des revendications précédentes, **caractérisé en ce que** le distributeur de lubrifiant (16) est fixé de manière détachable à une partie fixe ou mobile (6) de la machine-outil (2) ou à la pièce à usiner.

7. Procédé selon l'une quelconque des revendications précédentes, **caractérisé en ce que** les mouvements de l'outil (14) et/ou du distributeur de lubrifiant (16) sont commandé par un programme machine de la machine-outil (2), et **en ce que** la position du distributeur de lubrifiant fixé de manière détachable (16) est saisie dans le programme machine afin de rapprocher l'outil (14) avant une opération d'usinage ou entre deux opérations d'usinage, du distributeur de lubrifiant (16) et d'actionner l'organe d'actionnement (36).

8. Procédé selon la revendication 7, **caractérisé en ce qu'**une course de déplacement de l'outil (14) est saisie dans le programme machine après son contact avec l'organe d'actionnement (36), afin de commander la quantité de lubrifiant acheminée dans l'ouverture de délivrance (20).

9. Distributeur de lubrifiant pour lubrifier un outil d'enlèvement de copeaux ou de façonnage dans une machine-outil, comprenant un accumulateur de lubrifiant (24) contenant du lubrifiant et un organe d'actionnement (36) pour relier l'accumulateur de lubrifiant (24) à une ouverture de délivrance (20), **caractérisé en ce que** l'organe d'actionnement (36) peut être actionné mécaniquement dans l'ouverture de délivrance (20) par contact avec l'outil (14).

10. Distributeur de lubrifiant selon la revendication 9, **caractérisé en ce que** l'organe d'actionnement (36) est déplaçable et est déplacé par l'outil (14), afin d'acheminer du lubrifiant à délivrer à l'outil (14) dans l'ouverture de délivrance (20).

11. Distributeur de lubrifiant selon la revendication 10, **caractérisé en ce que** l'organe d'actionnement (36) peut être déplacé à l'encontre de la force d'un ressort (38).

12. Distributeur de lubrifiant selon la revendication 10 ou 11, **caractérisé en ce que** la longueur de la course de déplacement de l'organe d'actionnement (36) et/ou la durée du déplacement de l'organe d'actionnement (36) détermine la quantité de lubrifiant délivrée à l'outil (14).

13. Distributeur de lubrifiant selon l'une quelconque des revendications 9 à 12, **caractérisé par** un dispositif de fixation (22, 88, 90, 94, 96) pour la fixation détachable du distributeur de lubrifiant (16) à une partie fixe ou mobile de la machine-outil (2) ou à la pièce à usiner.

14. Distributeur de lubrifiant selon la revendication 13, **caractérisé en ce que** le dispositif de fixation (22, 94) comprend au moins un aimant (94).

15. Distributeur de lubrifiant selon la revendication 13, **caractérisé en ce que** le dispositif de fixation (22, 88) comprend au moins un corps de serrage (88).

16. Distributeur de lubrifiant selon l'une quelconque des revendications 9 à 15, **caractérisé en ce que** le lubrifiant possède une consistance pâteuse ou crémeuse.

17. Distributeur de lubrifiant selon l'une quelconque des revendications 9 à 16, **caractérisé en ce que** le lubrifiant dans l'accumulateur de lubrifiant (24) est soumis à une pression.

18. Distributeur de lubrifiant selon l'une quelconque des revendications 9 à 17, **caractérisé en ce que** l'outil est un outil allongé et en particulier un taraud (14), un taraud à refouler, ou un foret, qui peut être inséré avec son extrémité libre dans l'ouverture de délivrance (20).

19. Machine-outil à commande numérique, **caractérisée par** un distributeur de lubrifiant (16) selon l'une quelconque des revendications précédentes.
